# EUROPÄISCHE PATENTANMELDUNG

(11) **EP 2 343 495 A1**
(43) Veröffentlichungstag der Anmeldung: **13.07.2011**
(21) Anmeldenummer: 10195044.2
(22) Anmeldetag: 15.12.2010
(51) Int. Cl.: G01B 11/02

(54) **Sensorsystem zur Erfassung von Oberflächenstrukturen mehrerer Stückgüter**

(30) Priorität: 23.12.2009 DE 102009060551
(71) Anmelder: Deutsche Post AG, 53113 Bonn (DE)
(72) Erfinder: Franck, Hermann, 27721 Ritterhude (DE); Echelmeyer, Wolfgang, 27711 Osterholz-Scharmbeck (DE); Beesner, Ralf, 28357 Bremen (DE); Wellbrock, Eckhard, 28757 Bremen (DE)
(74) Vertreter: Jostarndt, Hans-Dieter

(57) **Zusammenfassung**

Die Erfindung betrifft ein Sensorsystem zur Erfassung von Oberflächenstrukturen von Stückgut (13), umfassend wenigstens einen Laserabstandsdetektor (10;10';10";10"'), der nach dem Triangulationsprinzip arbeitet und Mittel zur Bestimmung des Abstands zwischen dem Laserabstandsdetektor (10;10';10";10"') und einer Oberflächenstruktur eines Stückguts (13) aufweist, wobei der Laserabstandsdetektor (10;10';10";10"') wenigstens einen Analogausgang (15) umfasst, über den ein abstandsproportionales Analogsignal ausgebbar ist. Gemäß der Erfindung steht der Analogausgang (15) des wenigstens einen Laserabstandsdetektors (10;10';10";10"') über eine Verstärkerschaltung in Verbindung mit einer Auswerteeinheit (40), wobei die Verstärkerschaltung wenigstens einen Operationsverstärker (20:21) umfasst, der zwei Eingänge (22;23;24,25) aufweist und das Analogsignal des Laserabstandsdetektors (10;10',10";10"') an einem ersten Eingang (22;24) des wenigstens einen Operationsverstärkers (20:21) anliegt, während an dem anderen Eingang (23;25) des wenigstens einen Operationsverstärkers (20:21) eine gleitende Vergleichsspannung anliegt, die aus dem Analogsignal des Analogausgangs (15) gewonnen wird, das über einen Tiefpass an dem anderen Eingang (23;25) des Operationsverstärkers (20:21) anliegt. Der Ausgang des wenigstens einen Operationsverstärkers (20:21) ist mit der Auswerteeinheit (40) verbunden, wodurch die Verstärkerschaltung so ausgeführt ist, dass abrupte Änderungen des Analogsignals eine Änderung des Ausgangssignals des wenigstens einen Operationsverstärkers (20:21) bewirken, während langsamere Änderungen des Analogsignals keine Änderung des Ausgangssignals des wenigstens einen Operationsverstärkers (20:21) bewirken. Die Auswerteeinheit (40) weist Mittel zur Auswertung des Ausgangssignals des wenigstens einen Operationsverstärkers (20:21) auf.

## Beschreibung

Die Erfindung betrifft ein Sensorsystem zur Erfassung von Oberflächenstrukturen mehrerer Stückgüter, umfassend wenigstens einen Laserabstandsdetektor, der nach dem Triangulationsprinzip arbeitet und Mittel zur Bestimmung des Abstands zwischen dem Laserabstandsdetektor und einer Oberflächenstruktur eines Stückguts aufweist, wobei der Laserabstandsdetektor wenigstens einen Analogausgang umfasst, über den ein abstandsproportionales Analogsignal ausgebbar ist.

Das erfindungsgemäße Sensorsystem kann insbesondere im Bereich von Logistikzentren und Distributionszentren zur Erfassung der Oberflächenstrukturen von Stückgut eingesetzt werden, wobei die so gewonnenen Informationen für verschiedene Zwecke weiter verarbeitet werden können. Im Bereich von Logistikzentren und Distributionszentren wie beispielsweise Flughäfen, Post- und Frachtumladezentren oder Kommissionierungszentren werden eine Vielzahl von Stückgütern wie Pakete, Kartons oder sonstige Verpackungen transportiert und umgeschlagen. Das Umladen dieser Stückgüter beispielsweise zwischen zwei Positionen wird zunehmend automatisiert, um diese Vorgänge für das Personal zu vereinfachen und insgesamt zu beschleunigen. Hierbei werden typischerweise Roboter eingesetzt, die ein oder mehrere Stückgüter aufnehmen und umsetzen. Die Stückgüter weisen jedoch häufig keine einheitliche Größe, Formgebung und Oberfläche auf, was bei der Ansteuerung eines Roboters zu berücksichtigen ist und oftmals nicht oder nur mit einer aufwendigen Sensorik gelöst werden kann.

Dabei kann es an verschiedenen Umschlagstationen zu Umladeprozessen kommen, die eine Automatisierung wünschenswert machen. Beispielsweise ist dies beim Depalettieren von Paletten der Fall, die mit Kartons, Paketen, Büchern, Katalogen, etc. beladen sind. Hierbei müssen durch einen Roboter mehrere Lagen solcher Stückgüter von der Palette abgetragen und umgesetzt werden, wobei es sich einerseits um unterschiedlich große Güter, in einer Lage aber auch um unterschiedlich angeordnete Güter handeln kann. Ein Roboter kann Stückgüter auf einer solchen Palette somit nicht nach einem festen Schema aufnehmen und umsetzen sondern, wenn alle Güter einzeln umgesetzt werden sollen, ist eine Sensorik zum Erkennen jedes einzelnen Stückguts erforderlich. Nur so kann jedes Stückgut einzeln erfasst, aufgenommen und umgesetzt werden.

Beim Depalettieren von Stückgut von Paletten stellt sich ferner das Problem, dass Paletten mit kleinformatigen Gütern zur Stabilisierung oftmals mit einer Kunststofffolie umschrumpft sind. Damit diese Gebinde nicht schon vor dem Umschrumpfen auseinander fallen, wird insbesondere bei Katalogen und flachen Kartons alle 5-10 Lagen das Packmuster gewechselt und jeweils eine Papierzwischenlage eingefügt. Diese Papierzwischenlagen beeinträchtigen jedoch das automatisierte Depalettieren, da sie den Bearbeitungsprozess stören würden. Sie müssen daher ausgesondert werden, wofür sie bei einem automatisierten Prozess zuvor erkannt werden müssen.

Eine andere Umschlagstation stellt die Entladung eines Containers bzw. einer Wechselbrücke dar, die vor dem Ladetor eines Gebäudes abgestellt und dort entladen wird. Ist der Container mit einzelnen Kartons, Paketen, Verpackungen, etc. beladen, sind diese innerhalb des Containers üblicherweise übereinander gestapelt und werden von einer Person von oben aus einem Stapel entnommen und außerhalb des Containers beispielsweise auf einem Förderband abgelegt. Um diesen Vorgang zu vereinfachen und zu beschleunigen, ist aus der deutschen Offenlegungsschrift DE 10 2005 047 644 A1 ein Roboter bekannt, der durch die Ladeöffnung in einen zu entladenden Container hineingefahren werden kann. Dem Roboter stellt sich die vorderste Ladereihe des Containers dabei als senkrechter Stapel aus mehreren Stückgütern unterschiedlicher Größe und Form dar, wobei der Roboter eine Sensorik umfassen muss, die einzelne Güter in dem Stapel erkennen und lokalisieren kann, damit das betreffende Stückgut von einem Greifsystem des Roboters erfasst und auf ein Förderband umgesetzt werden kann. Geeignete Greifsysteme zum Aufnehmen von Stückgütern aus einem senkrechten Stapel sind beispielsweise aus den deutschen Offenlegungsschriften DE 102 006 022 278 A1 und DE 10 2006 022 277 A1 bekannt.

Um das stückweise Umschlagen von Gütern sowohl von Paletten als auch aus Containern automatisiert durch Roboter durchführen zu können, sind somit üblicherweise Sensoriken erforderlich, die verschiedene Oberflächeneigenschaften von Gütern innerhalb eines Stückgutstapels oder einer Stückgutlage erkennen können. Hierzu sind beispielsweise Kameralösungen mit einer Auswerte-Software bekannt, mit denen sich die Umrisse und/oder Oberflächenbeschaffenheit einzelner Stückgüter bestimmen lassen. Kameralösungen sind jedoch relativ kostenintensiv und stellen zudem hohe Anforderungen an die Arbeitsumgebung, da sie beispielsweise gegen Fremdlicht und Schattenwurf empfindlich sind. Insbesondere bei Katalogpaletten können ferner Fehldrucke als Papierzwischenlagen eingesetzt werden, so dass sich die Papierzwischenlage optisch nur schwer von den Katalogen unterscheiden lässt. Kameralösungen wären somit nicht in der Lage, derartige Papierzwischenlagen zu erkennen.

Ferner ist es möglich, mit einem 3D-Laserscanner und einer Bildbearbeitung die obere Kante beispielsweise eines Stückgutstapels zu erkennen. Im Allgemeinfall ist diese Information ausreichend, da ein Roboter so konstruiert werden kann, dass er den Greifvorgang an der Oberkante der Stückgüter ausrichtet. In einigen Fällen kann jedoch auch die Kenntnis über die Unterkante von Stückgut in einem Stapel erforderlich sein. Dies ist beispielsweise der Fall, wenn Güter deckenhoch in einem Container gestapelt sind und das jeweils oberste Stückgut an der Unterkante gegriffen werden muss.

Um auch Unterkanten erkennen zu können, muss also eine Sensorik bereit gestellt werden, die Spalte zwischen Stückgütern erkennt. Eine solche Sensorik könnte auch zur Erkennung von Papierzwischenlagen auf Paletten eingesetzt werden, da sie durch Auswertung entsprechender Signale den Unterschied zwischen einer Lage an Stückgütern mit mehreren Spalten und einer durchgehenden Kartonage ohne Spalte erkennen könnte.

Dabei ist zu berücksichtigen, dass die zu handhabenden Stückgüter wie Pakete, Kartons, Verpackungen etc. oftmals nachgiebig sind und ein Stapel nicht exakt senkrecht steht. Die Stückgüter sind ferner nicht exakt übereinander gestapelt und die Oberflächen können eingedrückt, leicht wellig und mit weiteren Unebenheiten wie Klebebändern und/oder Aufklebern versehen sein.

Wird ein Stückgutstapel bzw. eine Stückgutlage mit einem Sensor in einer Suchfahrt abgefahren, um die Spalte zwischen den Stückgütern zu detektieren, findet der Sensor bei seiner Suchfahrt somit eine Kontur vor, die nicht exakt parallel zur Roboterbahn verläuft. In der Kontur liegen vielmehr diverse Unebenheiten vor, wobei die Sensorik in der Lage sein muss, Spalte zwischen den Stückgütern von Unebenheiten auf der Oberfläche der Stückgüter zu unterscheiden.

Aufgabe der Erfindung ist es daher, ein möglichst einfaches Sensorsystem bereitzustellen, dass Spalte zwischen Stückgütern und Kanten von Stückgütern von Unebenheiten auf der Oberfläche von Stückgütern unterscheiden kann.

Erfindungsgemäß wird diese Aufgabe durch ein Sensorsystem mit den Merkmalen des unabhängigen Anspruchs 1 gelöst. Vorteilhafte Weiterbildungen des Sensorsystems und seine Kombination mit verschiedenen Vorrichtungen ergeben sich aus den Unteransprüchen 2-10.

Das erfindungsgemäße Sensorsystem zur Erfassung von Oberflächenstrukturen mehrerer Stückgüter umfasst wenigstens einen Laserabstandsdetektor, der nach dem Triangulationsprinzip arbeitet und Mittel zur Bestimmung des Abstands zwischen dem Laserabstandsdetektor und einer Oberflächenstruktur eines Stückguts aufweist. Dabei umfasst der Laserabstandsdetektor wenigstens einen Analogausgang, über den ein abstandsproportionales Analogsignal ausgebbar ist. Dieser Analogausgang des wenigstens einen Laserabstandsdetektors steht über eine Verstärkerschaltung in Verbindung mit einer Auswerteeinheit, wobei die Verstärkerschaltung wenigstens einen Operationsverstärker umfasst, der zwei Eingänge aufweist. Das Analogsignal des Laserabstandsdetektors liegt an einem ersten Eingang des wenigstens einen Operationsverstärkers an, während an dem anderen Eingang des wenigstens einen Operationsverstärkers eine gleitende Vergleichsspannung anliegt, die aus dem Analogsignal des Analogausgangs gewonnen wird, das über einen Tiefpass an dem anderen Eingang des Operationsverstärkers anliegt. Der Ausgang des wenigstens einen Operationsverstärkers ist mit der Auswerteeinheit verbunden, wodurch die Verstärkerschaltung so ausgeführt ist, dass abrupte Änderungen des Analogsignals eine Änderung des Ausgangssignals des wenigstens einen Operationsverstärkers bewirken, während langsamere Änderungen des Analogsignals keine Änderung des Ausgangssignals des wenigstens einen Operationsverstärkers bewirken. Dabei weist die Auswerteeinheit Mittel zur Auswertung des Ausgangssignals des wenigstens einen Operationsverstärkers auf.

Wird mit dem erfindungsgemäßen Sensorsystem die Oberflächenstruktur mehrerer Stückgüter abgefahren, wird fortlaufend der Abstand zwischen dem Laserabstandssensor und der Oberfläche des betreffenden Objekts erfasst, wobei es der angeschlossenen Auswerteinheit durch die Verstärkerschaltung möglich ist, abrupte Abstandsänderungen von langsameren Abstandsänderungen zu unterscheiden. Die Auswerteinheit kann dann beispielsweise abrupte Abstandsänderungen als Spalte zwischen zwei Stückgütern bzw. als Kante eines Stückguts werten, während langsamere Abstandsänderungen als sonstige Oberflächenstrukturen des abgetasteten Stückguts gewertet werden.

Um sowohl Abstandsvergrößerungen als auch Abstandsverkleinerungen erfassen zu können, kann die Verstärkerschaltung zwei Operationsverstärker umfassen, wobei ein erster Operationsverstärker und ein zweiter Operationsverstärker parallel geschaltet sind. Das Analogsignal des wenigstens einen Laserabstandsdetektors liegt dann an einem ersten Eingang des ersten Operationsverstärkers und einem ersten Eingang des zweiten Operationsverstärkers an, während die gleitende Vergleichsspannung an dem anderen Eingang des ersten Operationsverstärkers und dem anderen Eingang des zweiten Operationsverstärkers anliegt. Die Ausgänge der beiden Operationsverstärker sind über eine ODER-Schaltung mit der Auswerteeinheit verbunden, so dass sowohl ein Umschlagen des Ausgangssignals des ersten als auch des zweiten Operationsverstärkers von der Auswerteinheit detektiert werden kann.

Vorzugsweise ist der virtuelle Nullpunkt der Verstärkerschaltung so angehoben, dass die Verstärkerschaltung in einem anderen Spannungsbereich arbeitet als der wenigstens eine Laserabstandsdetektor. So kann die Verstärkerschaltung in einem für sie günstigen Bereich arbeiten, obwohl der Laserabstandsdetektor eine andere Spannung liefert.

In einem Ausführungsbeispiel der Erfindung ist das erfindungsgemäße Sensorsystem am Greifwerkzeug eines Roboters angebracht, wobei der Roboter Mittel zur Bewegung des Sensorsystems entlang der Oberfläche mehrerer Stückgüter aufweist, und das Sensorsystem in Verbindung mit einer Robotersteuerung steht, welche Mittel zur Auswertung der Ausgangssignale der Verstärkerschaltung und zur Ansteuerung des Roboters aufweist. Der Roboter kann so dazu genutzt werden, ein oder mehrere Laserabstandsdetektoren entlang der Oberfläche mehrerer Stückgüter zu verfahren, um so auf einer Suchfahrt die Oberflächenstruktur der Stückgüter bzw. Abstände zwischen mehreren Stückgütern zu ermitteln. Die Ergebnisse dieser Abstandsmessung können von der Robotersteuerung dazu genutzt werden, das Greifwerkzeug des Roboters so anzusteuern, dass beispielsweise einzelne Stückgüter gegriffen und umgesetzt werden können. Die so gewonnenen Informationen können jedoch auch für jede andere gezielte Ansteuerung des Roboters genutzt werden.

In einem Ausführungsbeispiel der Erfindung ist das erfindungsgemäße Sensorsystem beispielsweise am Greifwerkzeug eines Depalettierroboters angebracht und umfasst mehrere Laserabstandssensoren. Da Stückgut auf Paletten in mehreren Lagen gestapelt ist und üblicherweise von oben gegriffen wird, weist die Robotersteuerung des Roboters hierbei Mittel zur Bewegung des Sensorsystems in einer horizontalen Ebene entlang der Oberfläche wenigstens eines Stückguts auf, um die jeweils obere Lage einer Palette abzutasten. So kann die Struktur einer oberen Palettenlage erfasst und der Roboter entsprechend angesteuert werden, um beispielsweise einzelne Stückgüter aus dieser Lage zu greifen und umzusetzen.

In einem anderen Ausführungsbeispiel eines Depalettierroboters wird das erfindungsgemäße Sensorsystem dazu genutzt, um Papierzwischenlagen zu erkennen und auszusortieren. Werden in einer Lage aus Stückgütern keinerlei abrupte Abstandsänderungen detektiert, sondern beispielsweise nur langsamere Abstandsänderungen aufgrund von Wellen in einer Papierzwischenlage, kann dies bei einer Suchfahrt als Papierzwischenlage gewertet werden. So erkannte Papierzwischenlagen können dann vom Greifwerkzeug ergriffen und gezielt aussortiert werden.

Um die Suchfahrt mehrerer Laserabstandssensoren auswerten und dadurch auf eine Papierzwischenlage schließen zu können, auf der sich kein Stückgut mehr befindet, umfasst die Robotersteuerung in einem Ausführungsbeispiel der Erfindung eine Speichereinheit. Jeder Analogausgang eines Laserabstandssensors ist über eine Verstärkerschaltung gemäß der Erfindung mit dieser Speichereinheit verbunden. Die Speichereinheit umfasst mehrere RS-Flipflops, und jedes Ausgangssignal einer Verstärkerschaltung liegt an je einem RS-Flipflop an. Tritt ein Signal auf, wird das jeweilige Flipflop gesetzt. Die Ausgänge der RS-Flipflops sind über eine UND-Schaltung miteinander verknüpft, die einen definierten Wert liefert, wenn alle Flipflops gesetzt sind, wobei der definierte Wert von der Robotersteuerung des Depalettierroboters auswertbar ist. Wenn alle Flipflops gesetzt sind, bedeutet dies, dass jeder Sensor auf seiner Suchfahrt eine abrupte Abstandsänderung detektiert hat. Dies bewirkt, dass eine Lage nach einer Suchfahrt als Papierzwischenlage erkannt wird, wenn die UND-Schaltung den definierten Wert nicht liefert, denn dies bedeutet, dass nicht alle Sensoren reagiert und damit nicht alle Flipflops gesetzt wurden. Die Robotersteuerung umfasst ferner Mittel zum Rücksetzen der RS-Flipflops, so dass vor jeder neuen Suchfahrt ein Reset der Flipflops stattfinden kann.

Wenn unter keinen Umständen Papierzwischenlagen in eine Förderanlage gelangen sollen, werden so nur komplette Lagen, bei denen alle Sensoren angesprochen haben, auf die Förderanlage gelegt, während alles andere als Papierzwischenlage behandelt wird. Die Robotersteuerung umfasst dann vorzugsweise Mittel zur Ansteuerung des Absetzens einer Papierzwischenlage an einer definierten Position, wenn die UND-Schaltung den definierten Wert nicht liefert. So können Papierzwischenlagen aussortiert werden, nachdem sie erkannt wurden.

In einem anderen Ausführungsbeispiel der Erfindung ist das erfindungsgemäße Sensorsystem am Greifwerkzeug eines Paketroboters angebracht, wobei die Robotersteuerung des Paketroboters Mittel zur Bewegung des Sensorsystems in einer vertikalen Ebene entlang der Oberfläche mehrerer Pakete in einem Stapel aufweist. So kann wenigstens ein Laserabstandsdetektor vertikal an einem Stapel aus Stückgütern wie Paketen verfahren werden, um so Spalte zwischen den Paketen bzw. Kanten von Paketen zu detektieren. Die Robotersteuerung kann diese Informationen zur Bestimmung der Umrisse von Paketen nutzen, um beispielsweise einzelne Pakete greifen und umsetzen zu können. Dabei kann das Sensorsystem ergänzend zu wenigstens einem 3D-Laserscanner und einer Bildverarbeitung an einem Paketroboter angebracht sein, wobei die Robotersteuerung Mittel zur selektiven Anwahl des Sensorsystems und des 3D-Laserscanners umfasst. So kann das erfindungsgemäße Sensorsystem eingesetzt werden, wenn ein 3D-Laserscanner mit einer Bildverarbeitung für eine Ermittlung der erforderlichen Informationen über die Oberflächenstruktur eines Paketstapels nicht ausreichen.

In einem weiteren Ausführungsbeispiel der Erfindung ist das erfindungsgemäße Sensorsystem oberhalb oder seitlich einer Förderstrecke für Stückgut angebracht, wobei die Förderstrecke wenigstens zwei separat angetriebene Teilabschnitte umfasst. Das Sensorsystem erfasst die Oberflächen von vorbei transportiertem Stückgut und ermittelt so Spalte zwischen den Stückgütern. Das Sensorsystem steht in Verbindung mit einer Steuerung der Förderstrecke, über welche die Geschwindigkeit der Teilabschnitte separat ansteuerbar ist, und wenn eine Auswerteinheit einen zu kleinen Spalt zwischen zwei Stückgütern detektiert, kann die Geschwindigkeit der wenigstens zwei Teilabschnitte der Förderstrecke so variiert werden, dass es zu einer Vereinzelung der beiden Stückgüter kommt.

Insgesamt ermöglicht es das erfindungsgemäße Sensorsystem somit, genauer als mit bisher bekannten Vorrichtungen die Oberflächenstruktur von mehreren Stückgütern zu erfassen, wobei der Fokus auf abrupten Abstandsänderungen liegt, die als Spalt zwischen zwei Stückgütern bzw. als Kante eines Stückguts gewertet werden können. Langsamere Abstandsänderungen, die lediglich auf Unebenheiten auf der Oberfläche des jeweiligen Objekts hindeuten, werden dabei außer Acht gelassen.

Dabei ist das erfindungsgemäße Sensorsystem sehr robust und kann unabhängig von den Umgebungsbedingungen eingesetzt werden. Im Gegensatz zu aufwendigen Kameralösungen ist es ferner preiswerter, und das Grundprinzip lässt sich flexibel auf verschiedenen Anwendungsgebieten im Logistik- und Distributionsbereich einsetzen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Darstellung des Funktionsprinzips eines Abstandsmessgeräts;
- Fig. 2: eine Prinzipschaltung eines schwimmenden Komparators mit einem Operationsverstärker zur Messung von Abstandsvergrößerungen;
- Fig. 3: eine Prinzipschaltung eines schwimmenden Komparators mit zwei Operationsverstärkern zur Messung von Abstandsvergrößerungen und Abstandsverkleinerungen und einer ODER-Schaltung;
- Fig. 4: eine Prinzipschaltung eines schwimmenden Komparators mit einem Operationsverstärker und Anhebung des virtuellen Nullpunkts;
- Fig. 5: ein erstes Anwendungsbeispiel des erfindungsgemäßen Sensorsystems mit einer Detektion von Stückgütern in einem Paketstapel;
- Fig. 6: ein zweites Anwendungsbeispiel des erfindungsgemäßen Sensorsystems mit einer Detektion von Papierzwischenlagen auf einer Palette mit den Situationen a) bis c);
- Fig. 7: eine mögliche Schaltung zur Realisierung des Ausführungsbeispiels gemäß Fig. 6;
- Fig. 8: ein drittes Anwendungsbeispiel des erfindungsgemäßen Sensorsystems mit einer Detektion von Abständen zwischen Stückgütern auf einem Förderband.

Die Erfindung setzt Abstandssensoren nach dem Triangulationsprinzip ein, wie sie aus der industriellen Sensorik bekannt sind und auch als Reflextaster für Messaufgaben bzw. als Displacement Sensors bezeichnet werden. Mit derartigen Abstandssensoren können kleine Abstände im Bereich von 50 bis 800 mm detektiert werden, wobei diese bei Über- oder Unterschreitung eines definierten Abstands programmierte Steuerungsvorgänge auslösen. Die Schaltschwelle und -hysterese lässt sich dabei fest einprogrammieren.

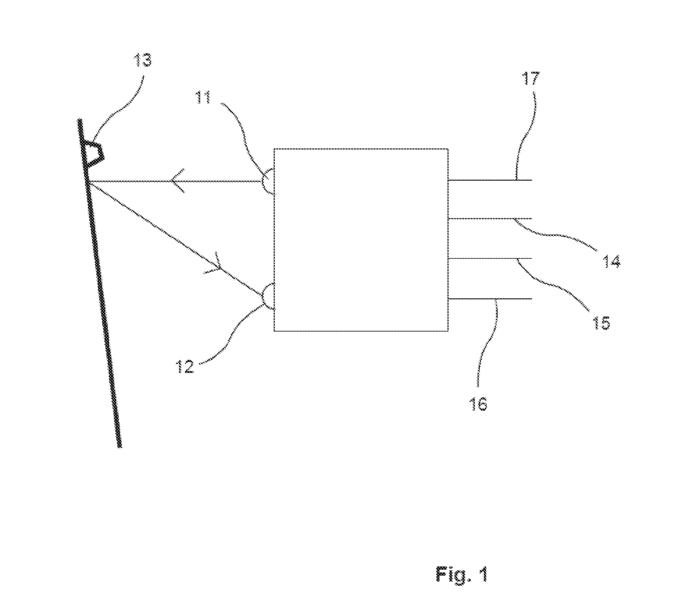

In Fig. 1 ist schematisch ein solches Abstandsmessgerät 10 dargestellt, an dem eine Betriebsspannung 17 und eine Masse 16 anliegen. Für eine Abstandsmessung sendet ein Sender 11 des Geräts 10 einen Laserstrahl aus, der von einem getroffenen Objekt 13 zurück gestreut wird, was in Fig. 1 durch Pfeile gekennzeichnet ist. Ein Teil des rückgestreuten Laserlichts wird durch eine Optik auf einen Empfänger 12 in Form einer Fotodiodenzeile gelenkt. Je nach Einfallswinkel werden unterschiedliche Dioden in dieser Fotodiodenzeile getroffen. Ein interner Mikrocontroller des Geräts 10 errechnet aus dieser Information den Abstand des reflektierenden Objektes 13.

Einige solcher Abstandsmessgeräte weisen neben einem Schaltausgang 14 einen Analogausgang 15 auf, der eine abstandsproportionale Spannung bzw. einen abstandsproportionalen Strom ausgibt (0 ... 10V bzw. 4 ... 20mA). Zusatzgeräte ermöglichen durch Auswertung dieses Analogsignals erweiterte Nutzungen. Beispielsweise lässt sich mit zwei Laserabstandssensoren eine Dickenmessung durchführen.

Werden derartige Abstandssensoren für die eingangs genannten Aufgaben im Bereich der Logistik und/oder Distribution verwendet, müssen diese in der Lage sein, die typischen abrupten, aber sehr kleinen Abstandsänderungen an der Grenze zwischen zwei Stückgütern von anderen Abstandsänderungen zu unterscheiden. Die in handelsüblichen Abstandssensoren eingebauten Auswerteelektroniken mit festen Schaltschwellen und fester Empfindlichkeit haben sich für die gestellte Aufgabe der Erfindung jedoch als ungeeignet erwiesen. Erfindungsgemäß wurde die Auswerteelektronik eines solchen Abstandssensors daher verändert.

Der Schaltausgang 14 eines Abstandssensors 10 mit seiner festen Schaltschwelle bleibt dabei ungenutzt. Das Analogsignal des Analogausgangs 15 wird dagegen durch eine externe Auswerteschaltung bzw. Verstärkerschaltung mit Operationsverstärkern ausgewertet. Diese Schaltung trennt die gesuchten kleinen, abrupten Spannungsänderungen von den unterlagerten, langsameren Spannungsänderungen.

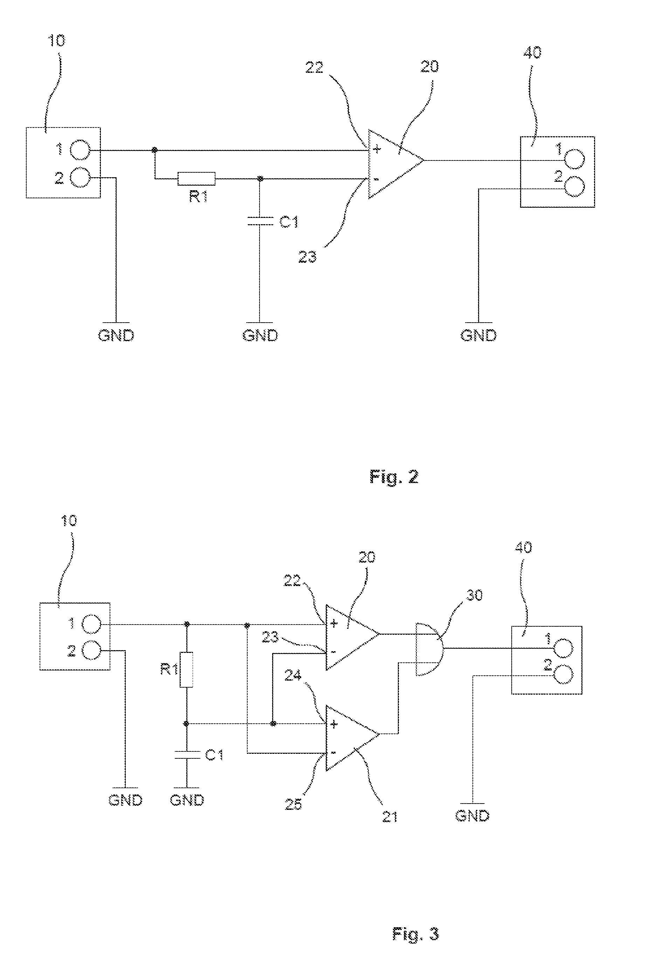

Für eine solche Auswerteschaltung kommen beispielsweise Hochpassschaltungen in Frage, deren Kernbestandteil vorzugsweise ein Operationsverstärker ist, der als schwimmender Komparator beschaltet ist. Eine solche Schaltung ist schematisch in Fig. 2 dargestellt, wobei die Auswerteschaltung hinter den Abstandssensor 10 geschaltet ist. Der verwendete Operationsverstärker 20 besitzt zwei Eingänge 22 und 23, wobei es sich um einen nicht-invertierenden Eingang 22 und einen invertierenden Eingang 23 handelt. Die zwischen diesen Eingängen liegende Spannungsdifferenz wird etwa um den Faktor 100.000 verstärkt, so dass der Ausgang des Operationsverstärkers 20 schon bei kleinsten Spannungsdifferenzen jeweils auf logisch "0" (z.B. -12V) oder logisch "1" (z.B. 12V) umschlägt, was von einer an den Operationsverstärker angeschlossenen Auswerteinheit 40 detektiert und ausgewertet werden kann.

Gibt man das analoge Ausgangssignal eines Abstandssensors 10 auf den nicht-invertierenden Eingang 22 des Komparators 20 und auf den invertierenden Eingang 23 eine feste Vergleichsspannung, schlägt bei Überschreiten der Vergleichsspannung der Ausgang des Komparators 20 um. Statt einer festen Vergleichsspannung kann jedoch auch eine gleitende Vergleichsspannung verwendet werden, die man über einen Tiefpass ebenfalls aus dem Ausgangssignal des Abstandssensors 10 gewinnt. Im Ausführungsbeispiel der Fig. 2 wird der Tiefpass durch den Widerstand R1 und den Kondensator C1 gebildet.

Durch die beschriebene Schaltung mit Tiefpass bleiben langsame Änderungen des Sensorsignals wirkungslos, während schnelle Änderungen zu einer Spannungsdifferenz zwischen den beiden Eingängen 22 und 23 des Komparators 20 führen und ihn kurzzeitig umschlagen lassen, bis sich die Signale an den beiden Enden angeglichen haben. Die Auswerteinheit 40 kann diesen Umschlag als Indiz dafür nutzen, dass hier eine abrupte Abstandsänderung, d.h. ein Spalt zwischen zwei Stückgütern detektiert wurde, was wiederum von einer Auswertesoftware zur Bestimmung der Umrisse von Stückgütern genutzt werden kann.

Die Ansprechempfindlichkeit lässt sich in einem in Fig. 2 nicht dargestellten Ausführungsbeispiel beeinflussen, indem man den einen der beiden Eingänge 22 oder 23 "vorspannt", also über einen einstellbaren Widerstand im Potenzial etwas verschiebt.

Die beschriebene Schaltung gemäß Fig. 2 reagiert auf abrupte

Abstandsvergrößerungen und lässt sich somit gut in Bereichen einsetzen, bei denen sich zwischen zwei Gütern ein Spalt gebildet hat. Dies ist beispielsweise im oberen Bereich eines Stapels aus leichten Stückgütern oder bei nebeneinander angeordneten Stückgütern auf einer Palette der Fall. Bei schweren Stückgütern oder im unteren Bereich eines Stapels können Güter jedoch so stark zusammengedrückt werden, dass sich kein Spalt ergibt, sondern die Güter lediglich minimal gegeneinander verschoben sind.

Da hier Abstandssprünge in beiden Richtungen auftreten können, kann die Schaltung in einem Ausführungsbeispiel der Erfindung um einen zweiten, parallel geschalteten Operationsverstärker 21 ergänzt werden, wie es schematisch in Fig. 3 dargestellt ist. Auch hier ist ein Tiefpass in Form des Widerstands R1 und des Kondensators C1 vorgesehen. Der zweite Operationsverstärker 21 weist ebenfalls zwei Eingänge 24 (nicht-invertierend) und 25 (invertierend) auf und spricht auf Abstandsverkleinerungen an. Das Analogsignal liegt bei diesem zweiten Operationsverstärker 21 am Eingang 25 an, während die gleitende Vergleichsspannung am anderen Eingang 24 anliegt. Die Signale des ersten Operationsverstärkers 20 und des zweiten Operationsverstärkers 21 werden über eine nachgeschaltete ODER-Schaltung 30 verknüpft, bevor sie zur Auswerteeinheit 40 gelangen.

Ein weiteres mögliches Schaltungsdetail stellt die Herstellung eines virtuellen Nullpunkts dar, was zu einer bauteilsparenden Auslegung führt. Operationsverstärker benötigen üblicherweise eine symmetrische Betriebsspannung von etwa +/- 6V ... 15V. Die Standard-Spannung in industriellen Steuerungen ist jedoch 24V/unsymmetrisch. Dieses Problem lässt sich durch die Herstellung eines virtuellen Nullpunkts bei + 12V für den/die Operationsverstärker lösen, wodurch die Schaltung mit OV/24V betrieben werden kann.

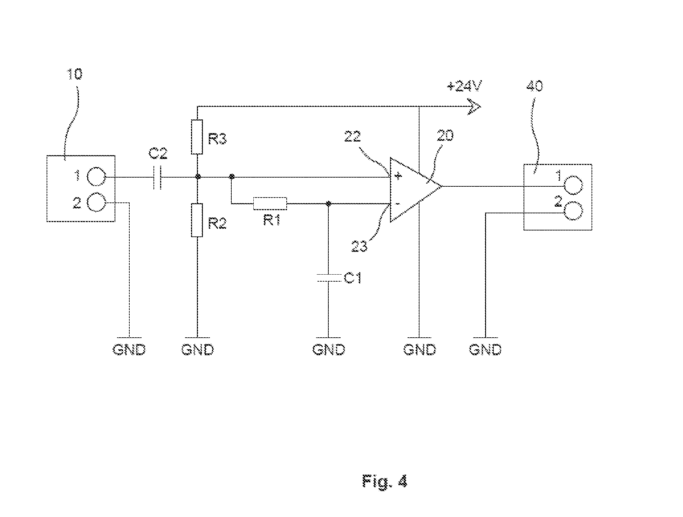

Allerdings arbeiten Operationsverstärker am besten um den (hier virtuellen) Nullpunkt herum und versagen nahe der Betriebsspannungen (hier unter 2V und über 22V). Die Abstandssensoren liefern jedoch 0 ... 10V. Da es nicht auf den Absolutwert ankommt, sondern auf die Änderungen in diesem Signal, wird in einem Ausführungsbeispiel der Erfindung ein Kondensator zur Potenzialtrennung verwendet. Ein solches Ausführungsbeispiel ist für eine Ausführungsform mit nur einem Operationsverstärker 20 in Fig. 4 dargestellt. Die Widerstände R2 und R3 bewirken dabei die Anhebung des virtuellen Nullpunkts, während der Kondensator C2 die Potenzialtrennung bewirkt. So arbeitet die Verstärkerschaltung im günstigsten Bereich um 12V herum, währen der Abstandssensor 0 ... 10V liefert.

Ein oder mehrere dieser Anstandssensoren können in einen Roboter integriert werden, der entlang mehrerer Stückgüter verfahren wird. Die Auswerteeinheit 40 in Verbindung mit einer Auswertesoftware liefert dem Roboter die nötigen Informationen über die Umrisse der Stückgüter, so dass diese beispielsweise einzeln vom Roboter ergriffen und umgesetzt werden können. Dabei können mehrere Stückgüter waagerecht oder senkrecht abgetastet werden. In waagerechter Suchrichtung ist dies üblicherweise unkritischer, da Stückgüter nicht durch die Schwerkraft zusammengedrückt werden. Hierbei ist es auch möglich, dass ein oder mehrere Abstandssensoren feststehen, während die abzutastenden Objekte bewegt werden.

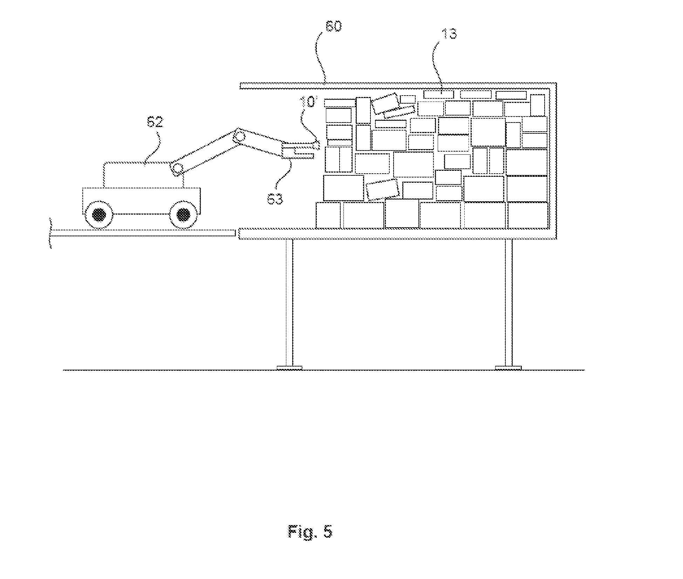

Die Einsatzmöglichkeiten der erfindungsgemäßen Sensorik sollen nun anhand verschiedener Ausführungsbeispiele erläutert werden. In einem ersten Ausführungsbeispiel, das in Fig. 5 dargestellt ist, wird die erfindungsgemäße Sensorik für eine senkrechte Suchfahrt entlang eines Stückgutstapels aus Paketen verwendet. Der Stückgutstapel befindet sich hierbei in einer Wechselbrücke 60, die auf Stützfüßen vor einem Gebäude abgestellt wurde. Dies stellt ein typisches Szenario im Logistikbereich und insbesondere im postalischen Betrieb dar, wenn mehrere Pakete 13 in einer Wechselbrücke 60 gestapelt vorliegen und entladen werden müssen. Über eine Laderampe kann ein Paketroboter 62 vor oder bei fortschreitender Entladung auch in die Wechselbrücke 60 verfahren werden. Der Paketroboter 62 weist an einem Knickarm einen Greifer 63 auf, der auf unterschiedliche Arten ausgebildet sein kann, um die Pakete 13 einzeln zu ergreifen und beispielsweise auf einem in Fig. 5 nicht dargestellten Förderband abzulegen. Der Greifer 63 ist in Fig. 5 lediglich schematisch dargestellt, wobei es sich vorzugsweise um einen Sauggreifer handelt, mit dem Pakete an der Vorderseite aufgenommen werden können.

Vorzugsweise an diesem Greifer 63 ist wenigstens eine erfindungsgemäße Abstandssensorik 10' angebracht, die durch Roboterbewegungen entlang des vorderen Stückgutstapels in einer vertikalen Ebene bewegt werden kann. Dabei können sowohl mehrere Suchfahrten in vertikaler als auch in horizontaler Richtung erfolgen, um die gesamte vordere Fläche des Stapels abzufahren. Die Suchfahrt erfolgt beispielsweise, bevor der Umsetzvorgang für den Paketstapel einsetzt. Wurden auf der Suchfahrt durch die Auswertung der Signale der Auswerteeinheit(en) die Spalte bzw. Kanten zwischen den Paketen des vorderen Stapels erkannt und von einer Software ausgewertet, liegen der Robotersteuerung alle erforderlichen Informationen über die Lage und die Umrisse der einzelnen Pakete vor. So können diese Pakete 13 anschließend mit dem Greifer 63 durch gezielte Roboterbewegungen ergriffen und beispielsweise auf ein Förderband umgesetzt werden.

Möglich ist es aber auch, die Erfassung der vorderen Seite des Paketstapels parallel zu Umsetzvorgängen oder nur in bestimmten Bereichen des Stapels durchzuführen, um den Vorgang insgesamt schneller zu gestalten. Beispielsweise kann der Umsetzvorgang oben am Stapel ansetzen, wofür eine Suchfahrt im oberen Bereich erforderlich ist. Wurden die oberen Pakete gegriffen und umgesetzt, kann eine weitere Erfassung von Spalten zwischen den Paketen entbehrlich sein, da alle weiteren Lagen gegebenenfalls durch andere Sensoriken wie 3D-Laserscanner anhand ihrer nun freigelegten Oberkante detektiert werden können. Reichen diese Informationen nicht aus, um die Lage eines Pakets zu bestimmen, kann statt dessen oder ergänzend die erfindungsgemäße Sensorik zum Einsatz kommen.

In einem zweiten Anwendungsbeispiel des erfindungsgemäßen Sensorsystems wird eine Suchfahrt in einer waagerechten Ebene durchgeführt. Dabei wird die Anordnung aus wenigstens einem Abstandssensor und einer Auswerteschaltung zur Erkennung von Stückgütern auf einer Palette eingesetzt. Eine typische Depalettierzelle besteht dabei aus einem Kettenförderer, der mehrere Paletten aufnimmt, zwischenspeichert, nacheinander in den Arbeitsbereich eines Roboters fördert und die Leerpaletten anschließend zum Abtransport stapelt.

Der Depalettierroboter trägt die Güter einzeln von der Palette ab und setzt sie beispielsweise auf einer Förderstrecke ab. Bei kleinformatigen, flachen Gütern ist es günstig, diese mit einem Sauggreifer aufzunehmen. Die Erfindung kann dabei dazu genutzt werden, die jeweils oberste Lage der Palette mit einem oder mehreren Abstandssensoren abzutasten und Spalte zwischen den Stückgütern zu detektieren. Liegen in der Auswerteinheit alle Informationen über die ermittelten Spalte und Paketkanten vor, kann der Roboter mit einem oder mehreren Sauggreifern so angesteuert werden, dass er die detektierten Stückgüter einzeln aufnimmt und umsetzt. Allerdings kann es auch vorgesehen sein, die Palette lagenweise mit einem Sauggreifer abzutragen, der sich über die ganze Palettengrundfläche erstreckt. Hierbei werden mehrere Stückgüter gleichzeitig aufgenommen und umgesetzt.

In beiden Fällen kann die erfindungsgemäße Abstandssensorik dazu genutzt werden, Papierzwischenlagen auf der Palette zu erkennen, die auszusortieren sind. Liegt auf der obersten Lage der Palette eine solche Papierzwischenlage auf, wird die Abstandssensorik auf der Oberfläche keine Spalte detektieren und die Auswertesoftware kann dies als Vorhandensein einer Papierzwischenlage werten. Die Papierzwischenlage kann aufgenommen und beispielsweise in einen separaten Behälter abgeworfen werden.

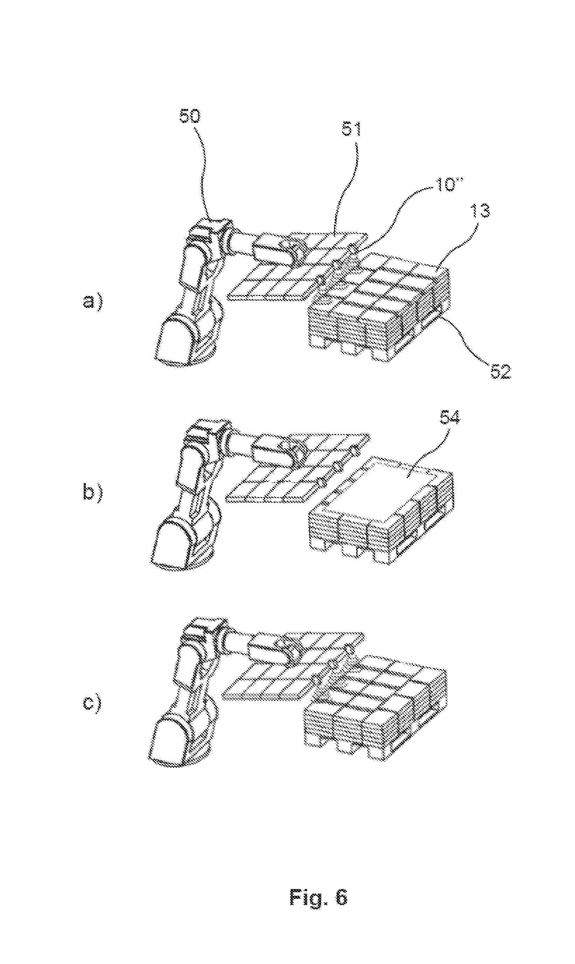

Dieser Vorgang wird im Folgenden anhand der Fig. 6 und den darin gezeigten Situationen a) bis c) beschrieben. Der Depalettierroboter 50 weist beispielsweise einen Greifarm mit einem daran angebrachten Sauggreifer 51 auf, um Palettenstückgut 13 von einer Palette 52 zu depalettieren. Der Depalettierroboter 50, der die Palettenstückgüter 13 lagenweise von der Palette 52 abhebt und auf einer Förderstrecke ablegt, bewegt das jeweilige Greifwerkzeug 51 auf dem Rückweg ohnehin über die Palette 52 hinweg. Sind an der Seitenkante des Greifwerkzeugs 51 ein oder mehrere Laserabstandssensoren 10" angebracht, die nach unten weisen, tasten diese auf der Rückfahrt das Oberflächenprofil der obersten Palettenlage ab, wie es in Fig. 6 für eine Situation a) dargestellt ist. Hierbei wird ein erstes Packmuster abgetastet, bei dem eine Reihe mit vier Stückgütern vor zwei Reihen mit jeweils fünf Stückgütern angeordnet ist. Da in diesem Packmuster nur Stückgüter enthalten sind, sprechen alle Abstandssensoren an und detektieren Kanten bzw. Spalte, wie es schematisch durch ansprechende Sensoren 10" dargestellt ist.

Sind in diesem Packmuster/Profil keine abrupten Abstandssprünge detektierbar, sondern nur langsame Abstandsänderungen wahrnehmbar (z.B. Wellen in der Papierzwischenlage), spricht die Auswerteinheit dagegen nicht an. Unter den Sensoren liegt somit eine Papierzwischenlage vor, wie es in der Situation b) in Fig. 6 gegeben ist. Keine Papierzwischenlage wird dagegen auch bei einem zweiten Packmuster gemäß der Situation c) in Fig. 6 erkannt, bei dem eine Reihe mit vier Stückgütern hinter zwei Reihen mit jeweils fünf Stückgütern angeordnet ist.

Da ein Abstandssensor nur entlang einer Linie misst, wird er nur einen bestimmten Bereich erfassen können. Nur weil ein Abstandssensor keine abrupten Abstandsänderungen gemessen hat, heißt dies jedoch nicht, dass sich nicht an einer anderen Stelle der Palettenoberfläche noch Güter auf der Zwischenlage befinden. Dies kann der Fall sein, wenn das lagenweise Depalettieren nicht exakt durchgeführt wurde. Daher ist es zweckmäßig, stets mehrere Abstandssensoren einzusetzen, um eine Palettenlage möglichst vollständig analysieren zu können.

Haben alle Sensoren während einer Suchfahrt mindestens eine Kante gefunden, handelt es sich wahrscheinlich um eine komplette Lage an Stückgütern wie Katalogen oder Kartons. Haben keine oder nur einzelne Sensoren angesprochen, handelt es sich um eine Papierzwischenlage bzw. um eine Papierzwischenlage, auf der noch einzelne Güter liegen, wie es in Fig. 6 für eine Situation b) dargestellt ist.

Soll möglichst keine Papierzwischenlage in eine Förderanlage gelangen, kann es vorgesehen sein, dass nur komplette Lagen an Stückgütern, bei denen alle Sensoren angesprochen haben, auf die Förderanlage abgelegt werden. Alle anderen Ergebnisse werden als Papierzwischenlage behandelt.

Das Ansprechen der Auswerteelektroniken der Abstandssensoren 10" ist somit einzeln in einer Speichereinheit zwischen zu speichern, um die Ergebnisse am Ende der Suchfahrt auswerten zu können. Dann wird geprüft, ob alle Sensoren angesprochen haben oder nicht. Eine solche Speichereinheit kann als Software in der Robotersteuerung realisiert werden oder als autarke Lösung mit einigen CMOS-Gattern aufgebaut werden. Dabei werden die Ausgangssignale der Auswerteinheiten der Sensoren auf je ein RS-Flipflop gegeben, wobei ein Flipflop gesetzt wird, wenn ein Signal auftritt. Deren Ausgänge werden über ein logisches UND verknüpft, das nur dann den definierten Wert "high" liefert, wenn alle Flipflops gesetzt sind. Der Wert wird am Ende der Suchfahrt abgefragt. Unmittelbar vor der nächsten Suchfahrt werden die Flipflops über ein Signal beispielsweise aus der Robotersteuerung wieder zurückgesetzt, was einen Reset bewirkt.

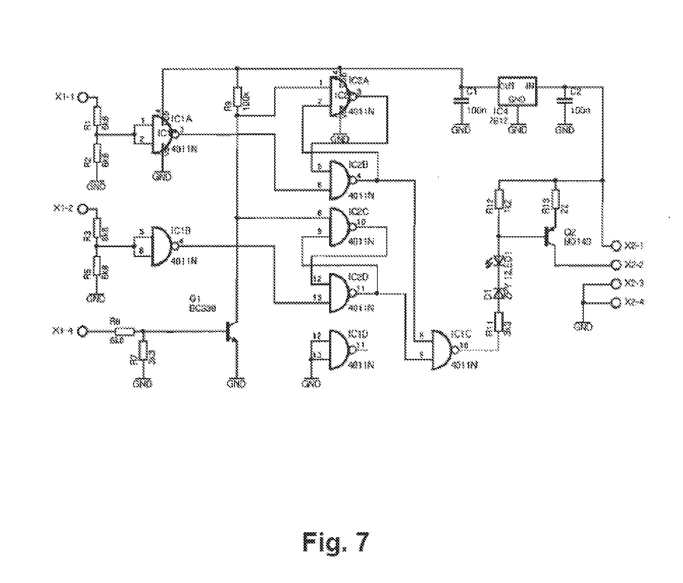

In Fig. 7 ist eine solche Schaltung mit CMOS-Gattern dargestellt, wie sie für das beschriebene Verfahren verwendet werden kann. Zwei Auswerteeinheiten von erfindungsgemäßen Abstandssensoriken liefern ihr Ausgangssignal an die Eingänge X1-1 und X1-2, während X1-4 der Reset-Eingang ist. IC1A und IC1 B bilden Inverter, und IC2A/IC2B und IC2C/IC2D sind als RS-Flipflops verschaltet. An ihren Ausgängen bildet IC1C ein UND-Gatter mit Invertierung (NAND-Gatter), das nur dann am Ausgang "low" liefert, wenn beide Eingänge "high" sind, also beide Flipflops gesetzt sind. Das "low" schaltet einen PNP-Transistor Q2 durch, so dass an einer Klemme X2-2 ein Signal erscheint.

X2-1 ist der Anschluss für die Spannungsversorgung, wobei der Spannungsregler IC4 erforderlich ist, da CMOS-ICs nicht direkt mit der industriellen Standard-Kleinspannung von 24V betrieben werden dürfen.

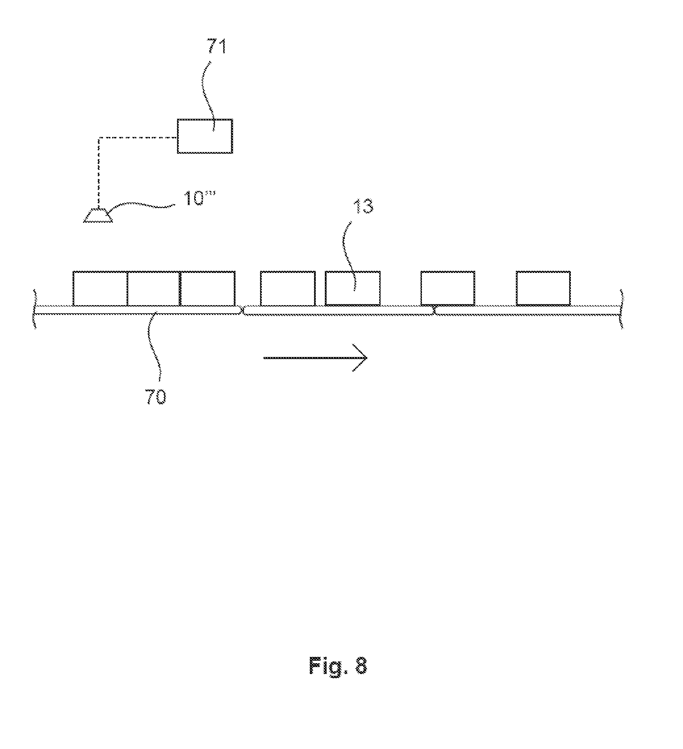

Ein weiterer Anwendungsfall für eine waagerechte Suchrichtung ist die Vereinzelung von Objekten, wie sie beispielsweise auf Förderstrecken für Stückgüter erforderlich sein kann. Beispielsweise werden Pakete 13 als Förderstückgüter auf einer Förderstrecke 70 abgelegt und zu einer nächsten Verarbeitungsstation transportiert, wie es schematisch in Fig. 8 dargestellt ist. Dabei kann es der Fall sein, dass mehrere Stückguter gleichzeitig auf dem Förderband abgesetzt werden oder es bei Volllast der Anlagen oder bei Anlagenstörungen vorkommt, dass eine Person schneller arbeitet als die Förderstrecke. Die Pakete liegen dann ohne Zwischenräume auf dem Förderband auf, so dass Beginn und Ende der einzelnen Sendungen nicht mehr durch Lichtschrankenanordnungen ermittelbar sind, wie es in Fig. 8 bei den Paketen links gegeben ist. Hier ist somit eine automatisierte Vereinzelung dieser Pakete wünschenswert, was durch die Erfindung ermöglicht wird.

Bei der herkömmlichen Vereinzelung in solchen Förderstrecken sind üblicherweise mehrere Teilförderstrecken vorgesehen, die jeweils mit unterschiedlicher Geschwindigkeit fördern. Die erste Teilstrecke fördert beispielsweise langsam, während die folgenden Teilstrecken stufenweise schneller fördern, so dass ein Pulk von Paketen auseinander gezogen wird. Am Ende wird dann mit einer Reflexionsschranke geprüft, ob zwischen den Paketen Zwischenräume bestehen. Wird eine Maximallänge überschritten, signalisiert die Anlage eine Störung.

Mit der Erfindung und der beschriebenen Anordnung aus einem oder mehreren Abstandssensoren 10"' in Verbindung mit einer Auswerteeinheit kann das Vereinzeln intelligenter durchgeführt werden. Der oder die Abstandssensoren 10"' werden vorzugsweise oberhalb oder seitlich der Förderstrecke 70 angeordnet, wobei sie im Gegensatz zu den bisher beschriebenen Ausführungsbeispiel fest stehen und in Richtung der Stückgüter auf der Förderstrecke ausgerichtet sind. Die zugehörige Auswerteeinheit erkennt zuverlässig die Stoßstellen zwischen den vorbei transportierten Paketen 13, wobei die Auswerteeinheit mit einer Förderstreckensteuerung 71 verbunden ist. Erkennt die Auswerteinheit zwei dicht beieinander liegende Pakete, wird die zuführende Förderstrecke durch die Steuerung 71 kurz gestoppt, während die nachfolgende Förderstrecke weiterläuft. Die jeweils erste Sendung wird so weitergefördert, während die jeweils zweite verzögert wird. Auf diese Weise kann die Vereinzelung zuverlässig erfolgen und die Vereinzelungsstrecke kann kürzer, mechanisch einfacher und damit kostengünstiger ausgestaltet werden. Selbst die Hochbaukosten können so verringert werden, da die Vereinzelungsstrecken weniger Platzbedarf haben als herkömmliche Vereinzelungsstrecken.

### Bezugszeichenliste:

- 10,10',10",10"': Laserabstandsmessgerät, Laserabstandsdetektor, Abstandsmessgerät, Abstandssensor
- 11: Sender
- 12: Empfänger, Fotodiodenzeile
- 13: Stückgut, Objekt, Paket
- 14: Schaltausgang
- 15: Analogausgang
- 16: Masse
- 17: Betriebsspannung
- 20: Erster Operationsverstärker, Komparator
- 21: Zweiter Operationsverstärker, Komparator
- 22,23,24,25: Eingang Operationsverstärker
- 30: ODER-Schaltung
- 40: Auswerteeinheit
- 50: Depalettierroboter
- 51: Greifwerkzeug, Sauggreifer
- 52: Palette
- 54: Papierzwischenlage
- 60: Wechselbrücke
- 62: Paketroboter
- 63: Greifer, Greifwerkzeug
- 70: Förderstrecke
- 71: Steuerung Förderstrecke
- R1,R2,R3: Widerstand
- C1,C2: Kondensator

## Patentansprüche

1. Sensorsystem zur Erfassung von Oberflächenstrukturen mehrerer Stückgüter (13), umfassend wenigstens einen Laserabstandsdetektor (10;10';10";10"'), der nach dem Triangulationsprinzip arbeitet und Mittel zur Bestimmung des Abstands zwischen dem Laserabstandsdetektor (10;10';10";10"') und einer Oberflächenstruktur des Stückguts (13) aufweist, wobei der Laserabstandsdetektor (10;10';10";10"') wenigstens einen Analogausgang (15) umfasst, über den ein abstandsproportionales Analogsignal ausgebbar ist, **dadurch gekennzeichnet,**
**dass** der Analogausgang (15) des wenigstens einen Laserabstandsdetektors (10;10';10";10"') über eine Verstärkerschaltung in Verbindung mit einer Auswerteeinheit (40) steht, wobei die Verstärkerschaltung wenigstens einen Operationsverstärker (20:21) umfasst, der zwei Eingänge (22;23;24,25) aufweist und das Analogsignal des Laserabstandsdetektors (10;10',10";10"') an einem ersten Eingang (22;24) des wenigstens einen Operationsverstärkers (20:21) anliegt, während an dem anderen Eingang (23;25) des wenigstens einen Operationsverstärkers (20:21) eine gleitende Vergleichsspannung anliegt, die aus dem Analogsignal des Analogausgangs (15) gewonnen wird, das über einen Tiefpass an dem anderen Eingang (23;25) des Operationsverstärkers (20:21) anliegt, und dass der Ausgang des wenigstens einen Operationsverstärkers (20:21) mit der Auswerteeinheit (40) verbunden ist, wodurch die Verstärkerschaltung so ausgeführt ist, dass abrupte Änderungen des Analogsignals eine Änderung des Ausgangssignals des wenigstens einen Operationsverstärkers (20:21) bewirken, während langsamere Änderungen des Analogsignals keine Änderung des Ausgangssignals des wenigstens einen Operationsverstärkers (20:21) bewirken, wobei die Auswerteeinheit (40) Mittel zur Auswertung des Ausgangssignals des wenigstens einen Operationsverstärkers (20:21) aufweist.

2. Sensorsystem nach Anspruch 1,
**dadurch gekennzeichnet,**
**dass** die Verstärkerschaltung einen ersten Operationsverstärker (20) und einen zweiten Operationsverstärker (21) umfasst, die parallel geschaltet sind, wobei das Analogsignal des wenigstens einen Laserabstandsdetektors (10;10',10";10"') an einem ersten Eingang (22) des ersten Operationsverstärkers (20) und einem ersten Eingang (25) des zweiten Operationsverstärkers (21) anliegt, während die gleitende Vergleichsspannung an dem anderen Eingang (23) des ersten Operationsverstärkers (20) und dem anderen Eingang (24) des zweiten Operationsverstärkers (21) anliegt, und dass die Ausgänge der beiden Operationsverstärker (20:21) über eine ODER-Schaltung (30) mit der Auswerteeinheit (40) verbunden sind.

3. Sensorsystem nach einem der Ansprüche 1 und 2,
**dadurch gekennzeichnet,**
**dass** der virtuelle Nullpunkt der Verstärkerschaltung so angehoben ist, dass die Verstärkerschaltung in einem anderen Spannungsbereich arbeitet als der wenigstens eine Laserabstandsdetektor (10;10',10";10"').

4. Sensorsystem nach einem der Ansprüche 1 bis 3,
**dadurch gekennzeichnet,**
**dass** es am Greifwerkzeug (51 ;63) eines Roboters (50;62) angebracht ist, wobei der Roboter (50;62) Mittel zur Bewegung des Sensorsystems entlang der Oberfläche wenigstens eines Stückguts (13) aufweist, und das Sensorsystem in Verbindung mit einer Robotersteuerung steht, welche Mittel zur Auswertung der Ausgangssignale der Verstärkerschaltung und zur Ansteuerung des Roboters (50;62) aufweist.

5. Sensorsystem nach Anspruch 4,
**dadurch gekennzeichnet,**
**dass** es am Greifwerkzeug (51) eines Depalettierroboters (50) angebracht ist und mehrere Laserabstandssensoren (10") umfasst, wobei die Robotersteuerung des Roboters (50) Mittel zur Bewegung des Sensorsystems in einer horizontalen Ebene entlang der Oberfläche wenigstens eines Stückguts (13) aufweist.

6. Sensorsystem nach Anspruch 5,
**dadurch gekennzeichnet,**
**dass** die Robotersteuerung eine Speichereinheit umfasst und jeder Analogausgang eines Laserabstandssensors (10") über eine Verstärkerschaltung gemäß einem der Ansprüche 1 bis 3 mit der Speichereinheit verbunden ist, wobei die Speichereinheit mehrere RS-Flipflops umfasst und jedes Ausgangssignal einer Verstärkerschaltung an je einem RS-Flipflop anliegt, und dass die Ausgänge der RS-Flipflops über eine UND-Schaltung miteinander verknüpft sind, die einen definierten Wert liefert, wenn alle Flipflops gesetzt sind, wobei der definierte Wert von der Robotersteuerung des Depalettierroboters (50) auswertbar ist, und die Robotersteuerung Mittel zum Rücksetzen aller RS-Flipflops umfasst.

7. Sensorsystem nach Anspruch 6,
**dadurch gekennzeichnet,**
**dass** die Robotersteuerung Mittel zur Ansteuerung des Absetzens einer Papierzwischenlage (54) an einer definierten Position umfasst, wenn die UND-Schaltung den definierten Wert nicht liefert.

8. Sensorsystem nach Anspruch 4,
**dadurch gekennzeichnet,**
**dass** es am Greifwerkzeug (63) eines Paketroboters (62) angebracht ist, wobei die Robotersteuerung des Paketroboters (50) Mittel zur Bewegung des Sensorsystems in einer vertikalen Ebene entlang der Oberfläche mehrerer Pakete (61) eines Stapels aufweist.

9. Sensorsystem nach Anspruch 8,
**dadurch gekennzeichnet,**
**dass** es ergänzend zu wenigstens einem 3D-Laserscanner und einer Bildverarbeitung an einem Paketroboter (62) angebracht ist, wobei die Robotersteuerung Mittel zur selektiven Anwahl des Sensorsystems und des 3D-Laserscanners umfasst.

10. Sensorsystem nach einem der Ansprüche 1 bis 9,
**dadurch gekennzeichnet,**
**dass** es oberhalb oder seitlich einer Förderstrecke (70) für Stückgut (13) angebracht ist, wobei die Förderstrecke wenigstens zwei separat angetriebene Teilabschnitte umfasst, und dass das Sensorsystem in Verbindung mit einer Steuerung (71) der Förderstrecke (70) steht, über welche die Geschwindigkeit der Teilabschnitte separat ansteuerbar ist.
